# EUROPEAN PATENT SPECIFICATION

(11) **EP 4 531 178 B1**
(45) Date of publication and mention of the grant of the patent: **01.04.2026**
(21) Application number: 24764247.3
(22) Date of filing: 26.02.2024
(51) Int. Cl.: H01M 10/613, H01M 10/625, H01M 10/643, H01M 10/653, H01M 10/6551, H01M 10/6554, H01M 10/6555, H01M 50/204, H01M 50/207, H01M 50/289

(54) **PACK CASE WITH IMPROVED HEAT-DISSIPATION STRUCTURE**
PACKGEHÄUSE MIT VERBESSERTER WÄRMEABLEITUNGSSTRUKTUR
BOÎTIER DE BLOC À STRUCTURE DE DISSIPATION DE CHALEUR AMÉLIORÉE

(30) Priority: 28.02.2023 KR 20230026639
(43) Date of publication of application: 02.04.2025
(73) Proprietor: LG Energy Solution, Ltd., Seoul 07335 (KR)
(72) Inventor: SON, Hong Se, Daejeon 34122 (KR); JANG, Byung Do, Daejeon 34122 (KR); LEE, Hyoung Suk, Daejeon 34122 (KR); KIM, Ki Young, Daejeon 34122 (KR); LIM, Chae Won, Daejeon 34122 (KR)
(74) Representative: Plasseraud IP
(86) International application number: PCT/KR2024/095436
(87) International publication number: WO 2024/181848

(56) References cited:
- EP-A1- 3 686 987
- EP-A1- 3 823 079
- KR-A- 20200 011 816
- KR-A- 20220 060 207
- KR-A- 20230 020 894
- KR-A- 20230 020 894
- KR-B1- 102 112 716
- KR-B1- 102 228 611
- US-A1- 2021 066 685
- US-A1- 2022 407 139
- US-B2- 10 998 598

## Description

This application claims the benefit of priority based on Korean Patent Application No. 10-2023-0026639, filed on February 28, 2023.

### [Technical Field]

The present invention relates to a pack case that improves the heat dissipation performance of a battery pack by facilitating conduction heat transfer from a battery module to a pack case.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will again cause an increase in temperature, which will cause a chain reaction, eventually leading to the catastrophic condition of thermal runaway.

In addition, if the secondary batteries are grouped in the form of modules or packs, thermal runaway caused by one secondary battery will cause the other secondary batteries in the vicinity to continuously overheat, resulting in the phenomenon of thermal propagation. In other words, when a thermal runaway occurs in a battery module in a battery pack, a large amount of conductive dust, gas, and flame are emitted from the high-voltage terminals of the battery module, which causes dust to accumulate on the high-voltage terminals of other neighboring battery modules and triggers the phenomenon of thermal propagation by heat transfer by gas and flame.

A design for preventing or delaying heat transfer of high heat from a battery cell or module that has undergone thermal runaway to neighboring battery cells or modules, comprising an insulation design that uses an insulation material to prevent or delay heat transfer from a battery module that has undergone thermal runaway to neighboring battery modules, and a heat dissipation design that initially and rapidly dissipates heat from a battery module that has undergone thermal runaway to the outside of the battery pack to reduce heat transfer to neighboring battery modules.

The prevention and delay of thermal runaway is a critical issue, especially in electric vehicles, where it can lead to life-threatening accidents, and laws and regulations are becoming increasingly strict. In other words, they require a sufficient delay time before the thermal runaway phenomenon spreads to allow time for emergency evacuation and safety measures. Therefore, there is a need for more effective measures to suppress or delay the occurrence of heat transfer in battery packs. Battery packs are known from the following publications: EP 3 686 987 A1, KR 102 112 716 B1, EP 3 823 079 A1, US 10 998 598 B2, US 2022/407139 A1 or KR 2023 0020894 A.

### [Disclosure]

### [Technical Problem]

The present invention is directed to providing a battery module in which the heat generated by a battery module that has generated a thermal runaway can be quickly transferred to a pack case in the form of conduction heat transfer in order to suppress and delay the heat propagation, and thereby be quickly released to the outside as convection heat transfer in the pack case.

However, the technical problem to be solved by the present invention is not limited to the above-described problem, and other problems not mentioned can be clearly understood by a person skilled in the art from the description of the invention described below.

### [Technical Solution]

The present invention is defined by the appended independent claim 1 and its dependent claims 2-8.

### [Advantageous Effects]

The pack case of the present invention having the configuration as described above, wherein the engraved structure formed on the top surface of the base plate provides an expanded heat transfer area for the thermal resin, and the expanded heat-dissipating area provided by the engraved structure increases the amount of heat conducted from the battery module to the base plate, thereby allowing the heat of the battery module in which thermal runaway has occurred to be promptly transferred to the base plate and dissipated to the outside of the battery pack, thereby contributing to the suppression or delay of heat propagation.

Further, the slot formed through the base plate along the separation wall member forming a boundary between the battery modules physically eliminates a portion of the heat conduction path between the battery modules, thereby reducing and delaying the excessive heat transfer caused by the battery module in which the thermal runaway occurs, as well as further promoting the heat dissipation in the base plate.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a drawing illustrating a pack case according to the present invention.
FIG. 2 is a cross-sectional view of an incision along line "A-A" of FIG. 1.
FIG. 3 is a drawing illustrating an engraved structure provided on a base plate.
FIG. 4 is a drawing illustrating a battery pack according to the present invention.
FIG. 5 is a cross-sectional view illustrating a contact surface of the battery module and the base plate.
FIG. 6 is a drawing illustrating a conduction heat transfer path in the battery pack of FIG. 5.
FIG. 7 is a drawing illustrating the pack case.
FIG. 8 is a drawing illustrating a conduction heat transfer path in the battery pack of FIG. 7.

### [Best Mode]

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a pack case having a space for accommodating at least one battery module, in one example, a plurality of engraved structures is formed on an upper surface of a base plate that is in contact support of a lower surface of the battery module, wherein the plurality of engraved structures forms a space that accommodates thermal resin.

Here, the engraved structure increases the heat transfer area of the battery module with respect to the thermal resin to be filled therein compared to a plane.

Accordingly, the pack case of the present invention, from the viewpoint of heat dissipation design, through the increase of the heat transfer area for the thermal resin, can quickly transfer the heat generated in the battery module that has caused the thermal runaway to the pack case in the form of conduction heat transfer, and as a result, a large amount of heat is transferred to the pack case at an early stage, effectively suppressing or delaying the heat propagation within the battery pack as the amount of heat released to the outside as convection heat transfer increases.

### [Mode for Invention]

Hereinafter, specific embodiments of a pack case 100 of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

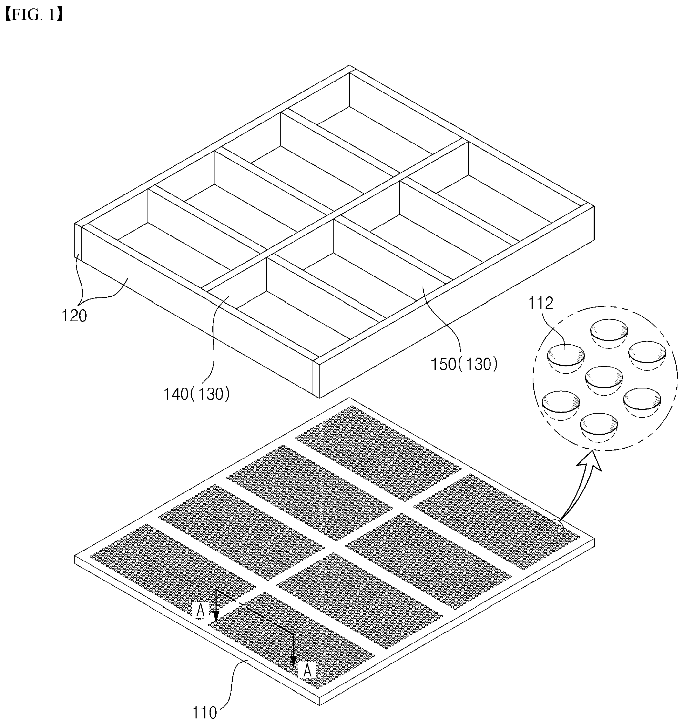

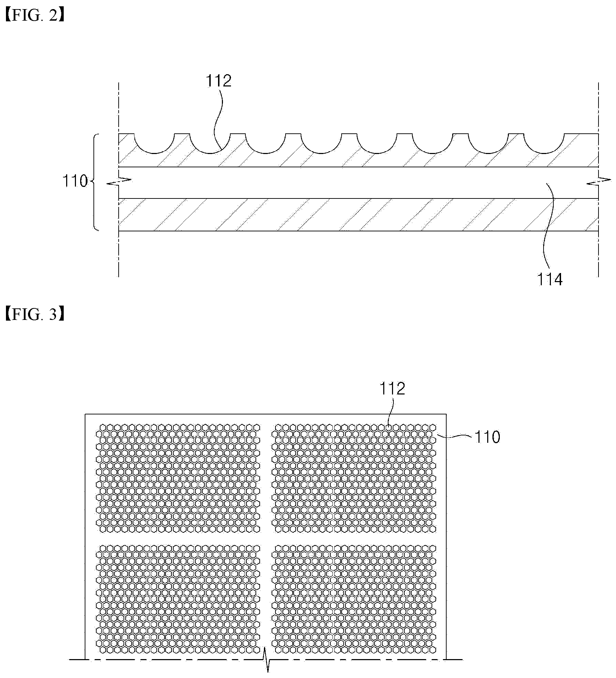

FIG. 1 is a drawing illustrating a pack case according to the present invention, and FIG. 2 is a cross-sectional view of an incision along line "A-A" of FIG. 1.

Referring to FIGS. 1 and 2, the illustrated pack case 100 includes a base plate 110 forming a low surface, a side plate 120 surrounding a periphery of the base plate 110, a separation wall member 130 longitudinally and/or transversely disposed to divide an accommodated space bounded by the side plate 120, and a lid 160 closing an upper surface of the accommodated space. Further, the base plate 110 is provided with a cooling channel 114 through which a cooling fluid is stored or flows. However, although the base plate 110 is shown in FIG. 2 as being provided with the cooling channel 114, it is possible that a separate cooling plate (not shown) is bonded to the base plate 110.

Referring to the upper surface of the base plate 110 shown in FIGS. 1 and 2, a plurality of engraved structures 112 are formed in each region in contact with the lower surface of the respective battery module 200. The plurality of engraved structures 112 may form a lattice structure that is uniformly arranged longitudinally with respect to the upper surface of the base plate 110, and the individual engraved structures 112 form an inwardly recessed space.

The plurality of engraved structures 112 may be manufactured by applying any of the known processing technologies, such as pressing, mechanical cutting, plasma processing, electrolytic processing, etching, casting, and the like. Further, by the plurality of engraved structures 112, the engraved structures may protrude correspondingly into the inside of the base plate 110, but since this may adversely influence the flow of the cooling fluid flowing through the cooling channel 114, it may be desirable that the inner surface of the base plate 110 forming part of the cooling channel 114 has a flat surface.

In the present invention, the plurality of engraved structures 112 formed on the upper surface of the base plate 110 form a space for accommodating thermal resin 300. A plurality of battery modules 200 are stored in the pack case 100 to complete as a battery pack 10, wherein the base plate 110 forming the bottom surface of the pack case 100 and the lower frame 222 of the module case 220 are in contact with each other to facilitate conduction heat transfer. Moreover, in order to facilitate conduction heat transfer, the contact surface of the base plate 110 and the module case 220 is interposed with the thermal resin 300 having excellent thermal conductivity.

When thermal runaway occurs in any of the battery modules 200 within the battery pack 10, a large amount of heat is propagated to neighboring battery modules 200 along the base plate 110, where conduction heat transfer is actively occurring. Meanwhile, the base plate 110 is often provided with heat dissipation means such as cooling channels 114. Therefore, it may be advantageous for suppressing or delaying heat propagation to increase the amount of heat dissipated outside the battery pack 10 by conducting the heat of the battery modules 200 in the pack case 100 to the base plate 110 as soon as possible, before the heat of the battery modules 200 in which thermal runaway occurs spreads by convective heat transfer to a side other than the base plate 110.

From this view of heat dissipation, the plurality of engraved structures 112 on the top surface of the base plate 110 provides an expanded heat transfer area for the thermal resin 300. FIG. 2 is a cross-sectional view through an incision along line "A-A" of FIG. 1, and as shown, the thermal resin 300 filled within the recessed engraved structures 112 has the effect of increasing the heat transfer area from the battery module 200 to the base plate 110 compared to a flat contact surface.

Through the heat transfer area expanded by the engraved structure 112, the amount of heat conducted from the battery module 200 to the base plate 110 is proportionally increased, thereby allowing the heat of the battery module 200, which has generated thermal runaway, to be transferred to the base plate 110 as soon as possible and to have a chance to dissipate to the outside of the battery pack 10. Thus, the plurality of engraved structures 112 formed on the upper surface of the base plate 110 contributes to suppressing or delaying heat propagation, mediated by the thermal resin 300.

In the exemplary embodiment of FIG. 2, the engraved structure 112 has a curved surface including a hemispherical surface and a semi-elliptical surface. This is in consideration of the fact that curved surfaces are an advantageous surface shape for expanding the heat transfer area. Alternatively, as shown in FIG. 3, the engraved structure 112 may form a honeycomb structure. While the honeycomb structure may be somewhat lower than the case of FIG. 2 in terms of expanding the heat transfer area, it may be effective in compensating for or strengthening the support stiffness of the base plate 110, which may be weakened by the engraved structure 112.

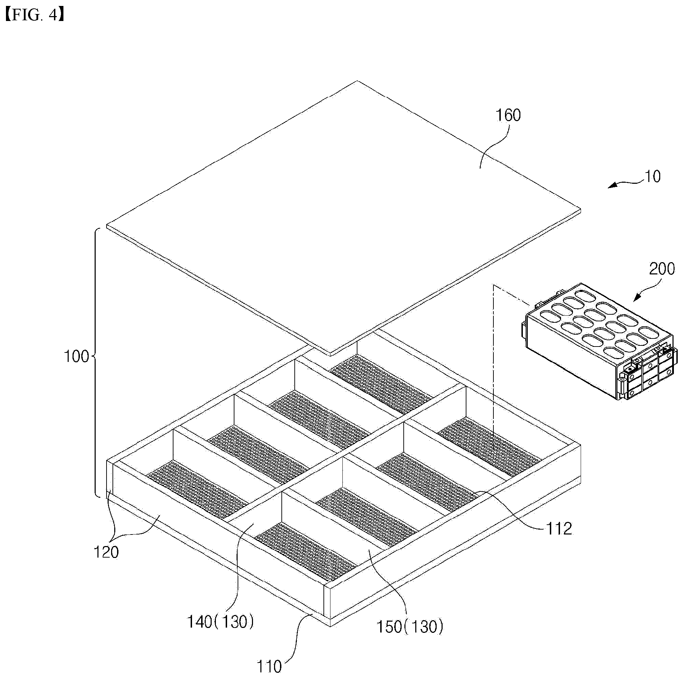

FIG. 4 is a drawing illustrating a battery pack 10 according to the present invention. Although a single battery module 200 is illustratively shown in FIG. 4, there is one battery module 200 for each individual accommodated space divided by the separation wall members 130.

The battery module 200 includes a plurality of battery cells 210, and a module case 220 that accommodates the plurality of battery cells 210. In addition, the battery module 200 may further include parts such as insulation material for insulation between the battery cells 210, a busbar frame assembly (BFA) for electrical connection and external output between the plurality of battery cells 210, and the like, but since these parts are not directly related to the heat dissipation design of the pack case 100 according to the present invention, a description of thereto will be omitted.

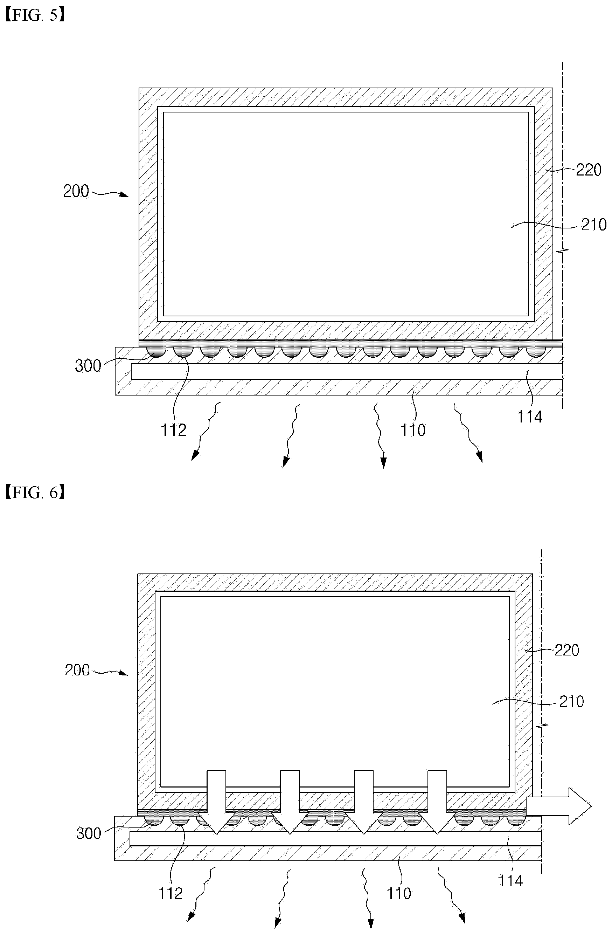

The pack case 100 shown includes a base plate 110 forming a low surface, a side plate 120 surrounding a periphery of the base plate 110, a separation wall member 130 longitudinally and/or transversely disposed to divide an accommodated space limited by the side plate 120, and a lid 160 closing an upper surface of the accommodated space. Further, the base plate 110 is provided with a cooling channel 114 in which a cooling fluid is stored or flows. However, although the cooling channel 114 is shown in FIGS. 2 and 5 as being provided in the base plate 110, it is possible to organize the cooling channel 114 as a structure in which a separate cooling plate (not shown) is bonded to the base plate 110.

Here, the separation wall member 130 may be further distinguished by a longitudinal center beam 140 that crosses the center of the pack case 100, bisecting the internal accommodated space from side to side, and transverse cross beams 150 that intersect to form a lattice with respect to the center beam 140, depending on their disposition direction with respect to the base plate 110.

FIG. 5 is a cross-sectional view illustrating a contact surface of the battery module 200 and the base plate 110. The battery pack 10 of FIG. 5 includes thermal resin 300 that is applied between the lower frame 222 of the battery module 200 and the base plate 110 of the pack case 100. Accordingly, all of the engraved structures 112 on the top surface of the base plate 110 are filled with the thermal resin 300.

As described in the first embodiment, the engraved structure 112 provided on the base plate 110 provides an expanded heat transfer area for the thermal resin 300, and by the expansion of the heat transfer area achieved on the base plate 110, the amount of heat conducted from the battery module 200 to the base plate 110 is proportionally increased. FIG. 6 is a diagram illustrating a conduction heat transfer path in the battery pack 10 of FIG. 5. Assuming that the depicted battery module 200 is subjected to thermal runaway, a large amount of the heat generated by the thermal runaway is transferred to the base plate 110 in the form of conduction heat transfer as the heat transfer area is increased by the engraved structure 112. A large amount of the heat transferred to the base plate 110 is dissipated through the base plate 110 and out of the battery pack 10 through the cooling fluid, thereby reducing the amount of heat conducted to other battery modules 200 in the vicinity using the base plate 110 as a heat conduction medium. This improvement in heat dissipation contributes to inhibiting and delaying heat propagation within the battery pack 10.

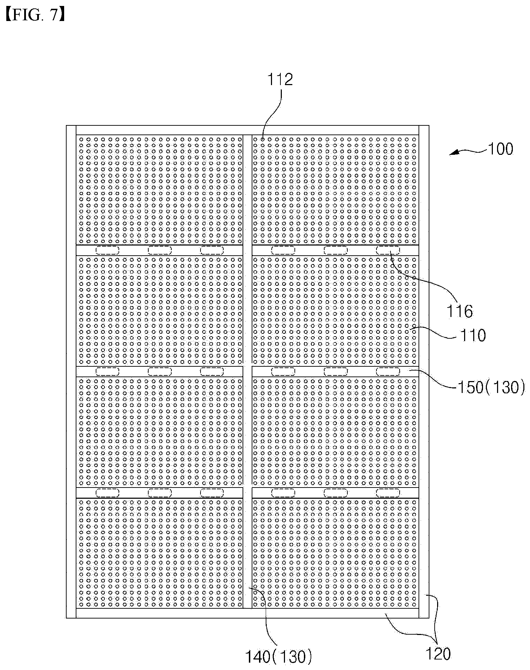

FIG. 7 is a drawing illustrating an alternative embodiment of the pack case 100. In the embodiment of the pack case 100 illustrated in FIG. 7, the pack case 100 includes a separation wall member 130 that divides a plurality of battery modules 200 from each other, meanwhile, the base plate 110 includes a through-formed slot 116 in a region in contact with the separation wall member 130. The through-formed slot 116 in the base plate 110 is intended to limit conduction heat transfer across the underside of the separation wall member 130.

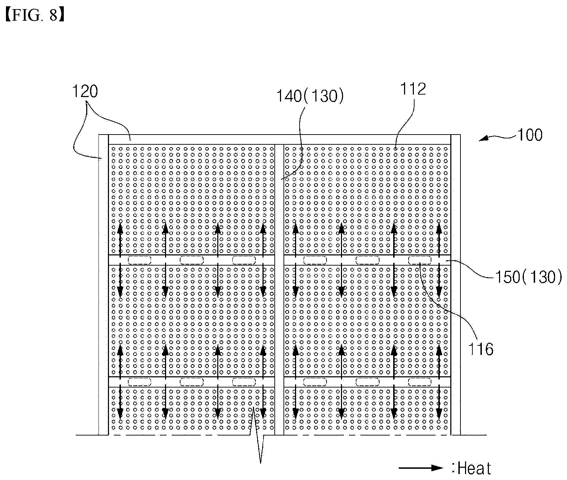

The separation wall members 130 forming the center beam 140 and/or the cross beam 150 form a boundary between the battery modules 200, and the conduction heat transfer propagating across the separation wall members 130 to the adjacent battery modules 200 is limited by the slots 116 formed through the base plate 110. In other words, as shown in FIG. 8, a portion of the heat conduction path between the battery modules 200 through the base plate 110 is physically eliminated by the slots 116 penetrating the base plate 110, thereby reducing and delaying excessive heat transfer caused by the battery modules 200 undergoing thermal runaway. For reference, when the base plate 110 is provided with a cooling channel 114, the slot 116 structure needs to be formed by avoiding the cooling channel 114.

In another aspect, the through slots 116 in the base plate 110 also serve to promote heat dissipation by convective heat transfer. In other words, conduction heat transfer propagating across the separation wall member 130 to the neighboring battery module 200 is restricted and delayed by the through-formed slots 116 in the base plate 110, thereby allowing more opportunity for heat dissipation from the base plate 110 to occur.

In one embodiment, it may be desirable that the slots 116 disposed side-by-side with respect to the separation wall members 130 do not extend beyond the separation wall members 130. To further limit conduction heat transfer, the slots 116 are formed through the base plate 110, which impacts the tightness of the pack case 100. Accordingly, the tightness of the pack case 100 may be achieved by designing the slots 116 to be sized such that the separation wall member 130 completely encloses the slots 116, such that the separation wall member 130 closes the slots 116 formed through the base plate 110.

Further, the slots 116 may be spaced apart along the separation wall member 130. Conduction heat transfer occurs into the region between the spaced apart slots 116, and the plurality of slots 116 being spaced apart, preferably evenly spaced apart, may be advantageous in preventing heat conducted to adjacent battery modules 200 from being locally concentrated and causing another thermal runaway.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: battery pack
100: pack case
110: base plate
112: engraved structure
114: cooling channel
116: slot
120: side plate
130: separation wall member
140: center beam
150: cross beam
160: lid
200: battery module
210: battery cell
220: module case
222: lower frame
300: thermal resin

## Claims

1. A battery pack (10), comprising:
- a battery module (200) comprising a plurality of battery cells (210), and
- a module case (220) accommodated the plurality of battery cells (210);
- a pack case (100), comprising:
a space for accommodating at least one battery module (200),
wherein a plurality of engraved structures (112) are formed on an upper surface of a base plate (110) of the pack case in contact support of a lower surface of the battery module (200), and the plurality of engraved structures (112) forming a space for accommodating thermal resin (300),
**characterized in that** the thermal resin (300) is applied between a lower frame (222) of the battery module (200) and the base plate (110) of the pack case (100),
wherein the thermal resin (300) is filled in the plurality of engraved structures (112) formed on the upper surface of the base plate (110),
wherein the pack case (100) comprises a separation wall member (130) dividing the plurality of battery modules (200) from each other,
and wherein the base plate (110) comprises a slot (116) formed through a region in contact with the separation wall member (130).

2. The battery pack (10) of claim 1, wherein the engraved structures (112) form a lattice structure uniformly arranged longitudinally with respect to the upper surface of the base plate (110).

3. The battery pack (10) of claim 1, wherein the engraved structure (112) increases the heat transfer area of the battery module (200) with respect to the thermal resin (300) to be filled therein compared to a plane.

4. The battery pack (10) of claim 1, wherein the engraved structure (112) forms a curved surface including a hemispherical surface and a semi-elliptical surface.

5. The battery pack (10) of claim 2, wherein the engraved structure (112) forms a honeycomb structure.

6. The battery pack (10) of claim 1, wherein through the thermal resin (300) filled in the engraved structures (112), the conduction heat transfer area of the base plate (110) with respect to the lower frame (222) of the battery module (200) is increased compared to a flat contact.

7. The battery pack (10) of claim 1, wherein the slot (116) is not exposed outside of the separation wall member (130).

8. The battery pack (10) of claim 1, wherein the slots (116) are spaced apart along the separation wall member (130) in a plurality.

## Patentansprüche

1. Batteriepack (10), umfassend:
- ein Batteriemodul (200), welches eine Mehrzahl von Batteriezellen (210) umfasst, und
- ein Modulgehäuse (220), welches die Mehrzahl von Batteriezellen (210) aufnimmt;
- ein Packgehäuse (100), umfassend:
einen Raum zum Aufnehmen wenigstens eines Batteriemoduls (200),
wobei eine Mehrzahl gravierter Strukturen (112) an einer oberen Fläche einer Basisplatte (110) des Packgehäuses gebildet sind, welche in Kontakthalterung mit einer unteren Fläche des Batteriemoduls (200) steht, und die Mehrzahl gravierter Strukturen (112) einen Raum zum Aufnehmen von thermalem Harz (300) bilden,
**dadurch gekennzeichnet, dass** das thermale Harz (300) zwischen einem unteren Rahmen (222) des Batteriemoduls (200) und der Basisplatte (110) des Packgehäuses (100) aufgebracht ist,
wobei das thermale Harz (300) in die Mehrzahl gravierter Strukturen (112) gefüllt ist, welche an der oberen Fläche der Basisplatte (110) gebildet sind,
wobei das Packgehäuse (100) ein Trennwandelement (130) umfasst, welches die Mehrzahl von Batteriemodulen (200) voneinander trennt,
und wobei die Basisplatte (110) einen Schlitz (116) umfasst, welcher durch einen Bereich gebildet ist, welcher in Kontakt mit dem Trennwandelement (130) ist.

2. Batteriepack (10) nach Anspruch 1, wobei die gravierten Strukturen (112) eine Gitterstruktur bilden, welche uniform longitudinal in Bezug auf die obere Fläche der Basisplatte (110) angeordnet ist.

3. Batteriepack (10) nach Anspruch 1, wobei die gravierte Struktur (112) den Wärmetransferbereich des Batteriemoduls (200) in Bezug auf das thermale Harz (300), welches darin einzufüllen ist, im Vergleich zu einer Ebene erhöht.

4. Batteriepack (10) nach Anspruch 1, wobei die gravierte Struktur (112) eine gekrümmte Fläche bildet, welche eine halbkugelförmige Fläche und eine halbelliptische Fläche umfasst.

5. Batteriepack (10) nach Anspruch 2, wobei die gravierte Struktur (112) eine bienenwabenförmige Struktur bildet.

6. Batteriepack (10) nach Anspruch 1, wobei durch das thermale Harz (300), welches in die gravierten Strukturen (112) gefüllt ist, der Wärmeleitungstransferbereich der Basisplatte (110) in Bezug auf den unteren Rahmen (222) des Batteriemoduls (200) im Vergleich zu einem ebenen Kontakt erhöht ist.

7. Batteriepack (10) nach Anspruch 1, wobei der Schlitz (116) nicht außerhalb des Trennwandelements (130) freigelegt ist.

8. Batteriepack (10) nach Anspruch 1, wobei die Schlitze (116) entlang des Trennwandelements (130) in einer Mehrzahl beabstandet sind.

## Revendications

1. Bloc-batterie (10), comprenant :
- un module de batterie (200) comprenant une pluralité d'éléments de batterie (210), et
- un boîtier de module (220) qui loge la pluralité d'éléments de batterie (210) ;
- un boîtier de bloc (100) comprenant :
un espace pour loger au moins un module de batterie (200),
dans lequel une pluralité de structures gravées (112) sont formées sur une surface supérieure d'une plaque de base (110) du boîtier de bloc en support à contact d'une surface inférieure du module de batterie (200), et la pluralité de structures gravées (112) formant un espace pour loger une résine thermique (300),
**caractérisé en ce que** la résine thermique (300) est appliquée entre un châssis inférieur (222) du module de batterie (200) et la plaque de base (110) du boîtier de bloc (100), dans lequel la résine thermique (300) est remplie dans la pluralité de structures gravées (112) formées sur la surface supérieure de la plaque de base (110),
dans lequel le boîtier de bloc (100) comprend un élément de paroi de séparation (130) séparant la pluralité de modules de batterie (200) les uns des autres,
et dans lequel la plaque de base (110) comprend une fente (116) formée à travers une région en contact avec l'élément de paroi de séparation (130).

2. Bloc-batterie (10) selon la revendication 1, dans lequel les structures gravées (112) forment une structure de maillage uniformément disposée longitudinalement par rapport à la surface supérieure de la plaque de base (110).

3. Bloc-batterie (10) selon la revendication 1, dans lequel la structure gravée (112) augmente la surface de transfert de chaleur du module de batterie (200) en ce qui concerne la résine thermique (300) à remplir à l'intérieur, par comparaison à un plan.

4. Bloc-batterie (10) selon la revendication 1, dans lequel la structure gravée (112) forme une surface incurvée comportant une surface hémisphérique et une surface semi-elliptique.

5. Bloc-batterie (10) selon la revendication 2, dans lequel la structure gravée (112) forme une structure en nid d'abeille.

6. Bloc-batterie (10) selon la revendication 1, dans lequel, par l'intermédiaire de la résine thermique (300) remplie dans les structures gravées (112), la surface de transfert de chaleur par conduction de la plaque de base (110) par rapport au châssis inférieur (222) du module de batterie (200) est augmentée par comparaison à un contact plat.

7. Bloc-batterie (10) selon la revendication 1, dans lequel la fente (116) n'est pas exposée à l'extérieur de l'élément de paroi de séparation (130).

8. Bloc-batterie (10) selon la revendication 1, dans lequel les fentes (116) sont espacées le long de l'élément de paroi de séparation (130) en une pluralité.
